Europäisches Patentamt

(19) **European Patent Office**  (11) Numéro de publication: **0 021 094**
**B1**

Office européen des brevets

(12) FASCICULE DE BREVET EUROPEEN

(45) Date de publication du fascicule du brevet: (51) Int. Cl.³: **G 09 G 1/04**
15.06.83

(21) Numéro de dépôt: **80102984.4**

(22) Date de dépôt: **29.05.80**

(54) Dispositif d'affichage rotatif à analyse de trame.

(30) Priorité: **29.06.79 US 53483**

(43) Date de publication de la demande:
**07.01.81 Bulletin 81/1**

(45) Mention de la délivrance du brevet:
**15.06.83 Bulletin 83/24**

(84) Etats contractants désignés:
**DE FR GB**

(56) Documents cités:
**GB-A-671 285**
**US-A-4 168 489**
**IBM TECHNICAL DISCLOSURE BULLETIN, vol.**
**18, no. 11, Avril 1976, page 3548 New York, U.S.A.**
**W. F. KLEIN; »Cathode-ray tube rotating appara-**
**tus«**

(73) Titulaire: **International Business Machines Corporation,**
**Armonk, N.Y. 10504 (US)**

(72) Inventeur: **Boyd, Clay Edward, 11913 Millwright Parkway,**
**Austin, TX 78750 (US)**
Inventeur: **Jones, John Calvin, 2924 San Gabriel View**
**Dr., Georgetown TX 78626 (US)**
Inventeur: **Mumola, Joanne Lorraine, 3910 Sierra Drive,**
**Austin Tx 78731 (US)**

(74) Mandataire: **Vekemans, André, COMPAGNIE IBM**
**FRANCE Département de Propriété Industrielle,**
**F-06610 La Gaude (FR)**

Dispositif d'affichage rotatif à analyse de trame

## Domaine technique

La présente invention concerne les dispositifs d'affichage et, plus particulièrement, les dispositifs d'affichage à analyse de trame équipés d'un tube cathodique rotatif.

## Etat de la technique antérieure

La rotation est une technique bien connue dans les systèmes d'affichage par segments, technique qui permet d'afficher toute la page d'un texte dans l'une ou l'autre de deux orientations possibles. Un tel système est décrit, par exemple, dans l'article intitutlé »Cathode-Ray Tube Rotating Apparatus« de W. F. Klein, IBM Technical Disclosure Bulletin, Vol. 18, No. 11, Avril 1976, page 3548. Dans les systèmes d'affichage par segments ou dans les systèmes d'affichage par décharge dans un gaz, cette rotation est concevable étant donné que tous deux peuvent être adressés à l'aide des coordonnées X−Y et que la rotation de l'affichage implique une simple permutation des coordonnées X et Y. Cependant, il n'en est pas ainsi lorsqu'il s'agit d'un système d'affichage à analyse de trame.

La technique de l'analyse de trame est utilisée dans la plupart des systèmes de contrôle vidéo et dans pratiquement tous les récepteurs de télévision. Dans cette technique, le faisceau électronique balaye la trame à une vitesse fixe, normalement de la gauche vers la droite et du haut vers le bas. Ce balayage est connu sous le terme de balayage horizontal. En revanche, le balayage vertical implique un balayage du bas vers le haut et de la gauche vers la droite.

On connaît également des systèmes d'affichage à tube cathodique dans lesquels un commutateur permet d'agir sur la longueur des lignes de balayage ainsi que sur la hauteur de l'image. Un tel système est décrit, par exemple, dans le document de brevet GB-A-671 285.

Cependant dans ce système le tube reste fixe et c'est la partie utilisée de l'écran qui est modifiée.

L'affichage des données d'un texte sur un dispositif de contrôle est une technique bien connue dans laquelle le caractère est découpé en plusieurs ensembles de bits vidéo (ou éléments d'information binaire) qui sont affichés sur des lignes de balayage adjacentes. Dans un système à balayage progressif, le faisceau électronique trace les caractères par rangée suivant un ordre ascendant. Les rangées ont une longueur fixe déterminée par la largeur de l'écran d'affichage, et le nombre de lignes du texte est fixé par la hauteur de l'écran d'affichage. Etant donné que les é crans d'affichage sont de forme rectangulaire, il est souhaitable de pouvoir soumettre le dispositif d'affichage à une rotation de sorte que ce soit le côté vertical qui soit le plus long, pour l'affichage de documents longs ou le côté horizontal qui soit le plus long, pour l'affichage de documents particulièrement larges. La rotation du dispositif d'affichage remplace le balayage horizontal par un balayage vertical pour lequel le dispositif de déflexion est soumis à rotation, ou vice versa. Pour des caractères à pas fixe, le balayage vertical n'est pas plus difficile que le balayage horizontal. Cependant, pour des caractères à espacement proportionnel, le balayage vertical est beaucoup plus complexe étant donné que les caractères situés sur des lignes adjacentes ne sont pas alignés. Ceci implique qu'il faille faire appel à des indicateurs de texte pour chaque ligne du texte et que le générateur de caractères donne à sa sortie un moins grand nombre d'informations. De plus, étant donné qu'il faut un balayage horizontal et un balayage vertical, ce double impératif se fait ressentir sur le prix de revient.

## Exposé de l'invention

Le dispositif de la présente invention, tel qu'énoncé dans la revendication 1, permet d'afficher un texte dont la dimension selon un premier axe est plus grande que la dimension selon un deuxième axe sur un dispositif d'affichage à analyse de trame dont la dimension selon un premier axe est plus grande que la dimension selon un deuxième axe et pouvant être entraîné en rotation sur 90° jusqu'à ce que son premier axe corresponde à la plus grande dimension du texte à afficher. Le dispositif de déviation du dispositif d'affichage est fixé au châssis support. Un tube cathodique est monté à rotation dans le dispositif de déviation et est maintenu en place par un palier de butée annulaire qui permet la rotation du tube cathodique sur 90°. Un commutateur de commande est actionné par la rotation du tube cathodique afin de commander sélectivement le balayage horizontal ainsi que le balayage vertical du tube cathodique pour qu'il soit conforme à l'orientation du tube.

## Brève description des figures

La Figure 1 représente schématiquement une vue de côté du dispositif d'affichage à tube cathodique.

La Figure 2 représente une vue en coupe du dispositif d'affichage prise selon la ligne II-II de la Figure 1.

La Figure 3 représente une vue en coupe partielle du dispositif d'affichage prise selon la ligne III-III de la Figure 2.

La Figure 4 représente schématiquement le circuit de commande du dispositif d'affichage de la présente invention.

La Figure 5 représente schématiquement une vue de face montrant les orientations possibles du dispositif d'affichage.

## Description d'un mode de réalisation de l'invention

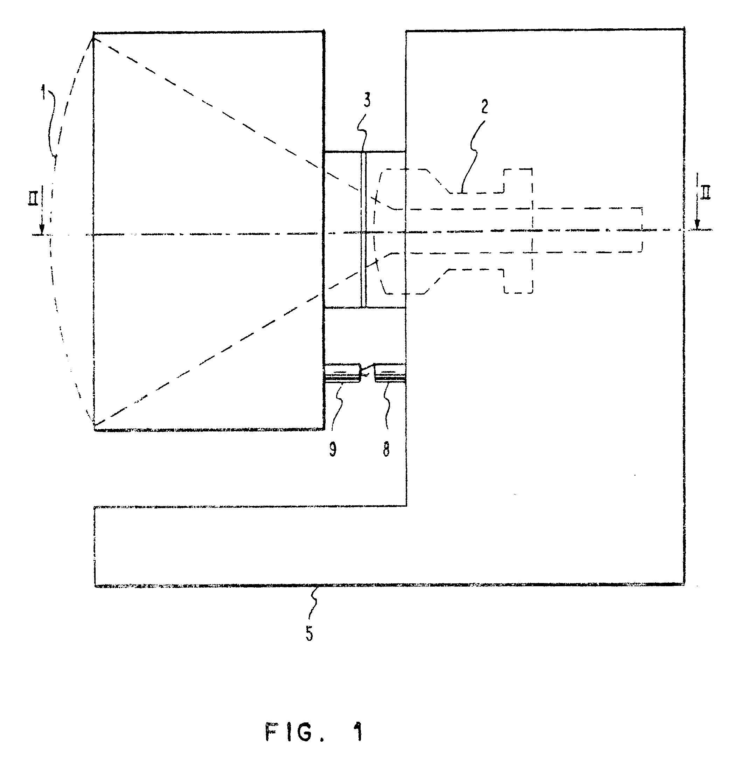

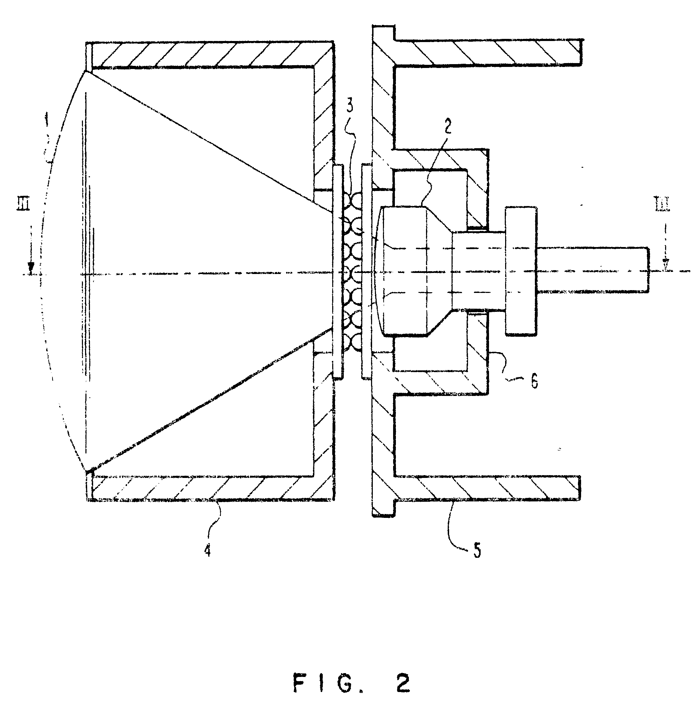

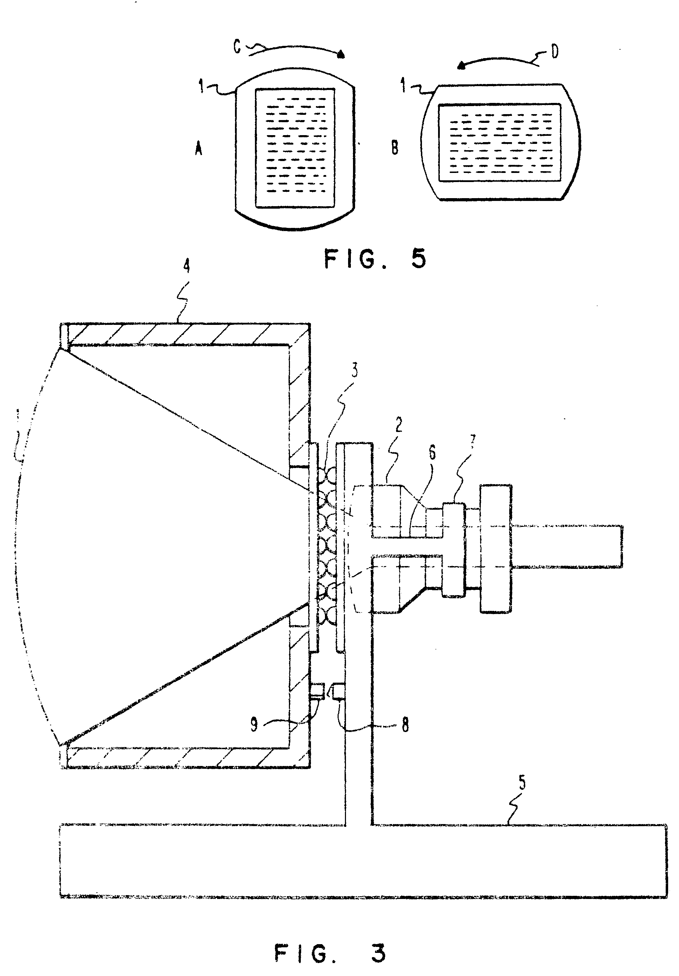

La Figure 1 représente une vue en élévation latérale d'un dispositif d'affichage généralement utilisé dans les systèmes de traitement de texte comme terminal d'entrée/révision de données comportant un tube cathodique 1 sur l'écran duquel un faisceau électronique peut écrire des caractères et des symboles sous la commande d'une bobine de déflexion 2. Les Figures 2 et 3 montrent respectivement une vue en plan et en coupe et une vue de côté et en coupe partielle du dispositif d'affichage. La bobine de déflexion 2 est annulaire et est montée autour du col du tube cathodique 1. Un collier 7 maintient assemblées les parties de la bobine de déflexion 2. La bobine 2 est fixée au châssis 5 du système d'affichage. Le tube cathodique 1 traverse le palier de butée annulaire 3 dont une extrémité est fixée au boîtier 4 de l'écran du tube cathodique 1, l'autre extrémité étant fixée au châssis 5. Un commutateur 8 est fixé au châssis 5 et un élément de commande de commutation 9 est fixé au boîtier 4.

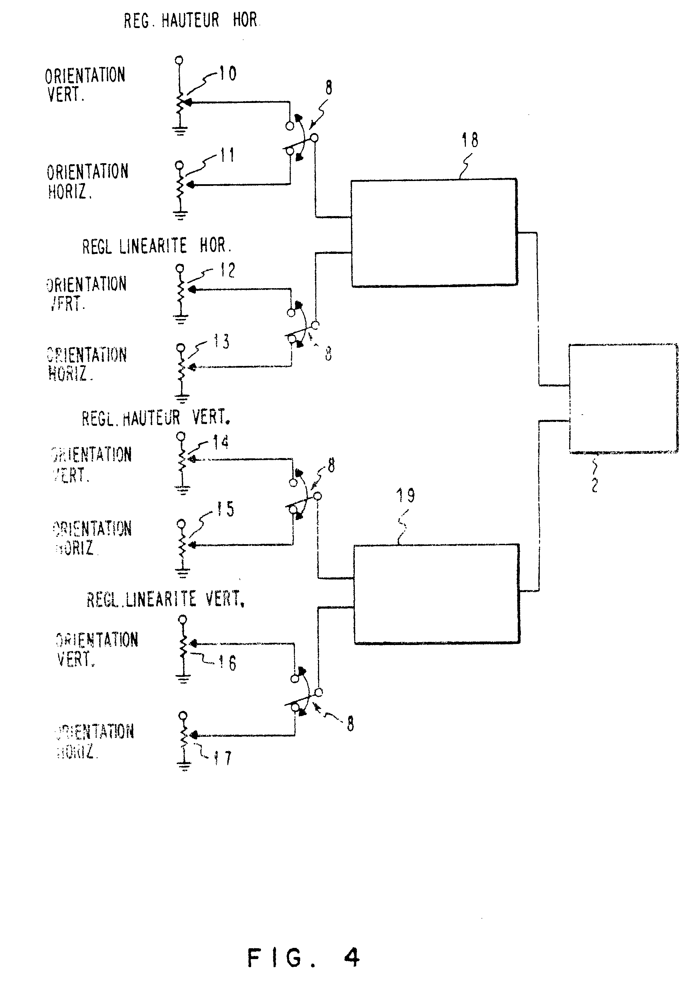

La Figure 4 représente le circuit de commande de la bobine de déflexion 2. Les circuits de synchronisation et de balayage horizontaux et verticaux 18 et 19 sont de type bien connu dans l'art antérieur et peuvent être construits en utilisant des circuits intégrés classiques. Les circuits sont pourvus d'entrées qui nécessitent des résistances pour définir la longueur et la hauteur du balayage horizontal et vertical du faisceau électronique. Le commutateur 8 est en fait constitué par un banc de commutateurs à deux voies qui sélectionnent les résistances de commande correspondant à l'orientation de l'écran cathodique.

La Figure 5 montre les deux positions d'orientation de l'écran d'affichage. Dans la position A, l'écran 1 est orienté de sorte que la plus grande dimension soit verticale. Dans cette position, les documents longs peuvent être affichés sur l'écran. Les résistances, 10, 12, 14 et 16 sont sélectionnées par le commutateur 8 pour commander les circuits de balayage lorsque l'écran 1 se trouve en position A.

En position B, l'écran 1 est orienté de sorte que la plus grande dimension soit horizontale. Dans cette position, les documents particulièrement larges, peuvent être affichés sur l'écran. Les résistances 11, 13, 15 et 17 sont sélectionnées par le commutateur 8 pour commander les circuits de balayage lorsque l'écran 1 se trouve en position B. Il est à noter que dans les positions A et B, le faisceau électronique est commandé par le même ensemble de circuits de balayage à l'exception des résistances de commande. Dans le mode de réalisation préféré, le balayage horizontal est employé indifféremment pour l'une ou l'autre des orientations de l'écran d'affichage. Cependant, on pourrait très bien concevoir une sélection basée sur un balayage vertical. Dans le même ordre d'idée, il est à noter que le changement d'orientation de l'écran va provoquer un changement de l'apparence des caractères sur l'écran si la police de caractères obtenus par matrice de points présente des densités de points horizontale et verticale différentes. Il faut donc éventuellement prévoir une police de caractères qui convienne à des pages de dimensions et d'orientations différentes. A cet égard, on peut se reporter à la police de caractères décrite dans l'article intitulé »Universal Font For Vertical Or Horizontal Page Orientations« de C. E. Boyd, K. R. Demke et J. L. Mumola, IBM TECHNICAL DISCLOSURE BULLETIN, Vol. 21, No. 9, Février 1979, pages 3489 à 3491.

Durant le fonctionnement, pour modifier l'orientation de l'écran 1 pour qu'il passe de la position A à la position B, l'opérateur saisit le boîtier 4 de l'écran d'affichage et le fait tourner dans le sens de la flèche C. Un élément d'arrêt est utilisé sur le palier de butée 3 pour empêcher la rotation du boîtier 4 au-delà de la position horizontale B. Le commutateur 8 entre en contact avec l'élément de commande de commutation 9 pour faire basculer le banc de contacts de sorte que les résistances, 11, 13, 15 et 17 commandent les circuits de balayage. Pour ramener l'affichage à la position A, la tête d'affichage est entraînée en rotation dans le sens de la flèche D jusqu'à ce qu'elle rencontre un élément d'arrêt sur le palier de butée 3. A ce moment, l'élément de commande de commutation 9 se déconnecte du commutateur 8, cette déconnexion se traduisant par la mise en circuit des résistances 10, 12, 14 et 16 dans le circuit de commande de balayage et la mise hors-circuit des résistances 11, 13, 15 et 17. La valeur des résistances détermine la longueur des lignes de balayage et le nombre de ces lignes sur l'écran ainsi que la section du faisceau électronique et la distance entre les lignes.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention. Par exemple, le balayage vertical peut être employé à la place du balayage horizontal ou le tube cathodique peut être soumis à rotation par des moyens électriques au lieu d'utiliser une rotation manuelle.

## Revendications

1. Dispositif d'affichage d'un texte dont le format présente une première dimension selon un premier axe et une deuxième dimension selon un deuxième axe perpendiculaire audit premier axe, sur l'écran d'un tube cathodique (1) présentant également une première dimension selon un premier axe et une deuxième dimension selon un deuxième axe, permettant d'afficher ledit texte sur le même écran, aussi bien lorsque ladite première dimension dudit texte est plus grande que la deuxième, que lorsque ladite première dimension est plus petite que la deuxième, dispositif du type dans lequel l'écran du tube cathodique peut être entraîné en rotation de sorte que la plus grande dimension du texte corresponde à la plus grande dimension de l'écran, caractérisé en ce qu'il comprend:

— des moyens permettant de faire tourner ledit tube cathodique de 90° par rapport à sa bobine de déflexion (2) qui reste fixe,
— des moyens pour modifier la longueur de chaque ligne de balayage en réponse à ladite rotation,
— et des moyens pour modifier le nombre de lignes de balayage nécessaires dans un sens opposé à la modification de longueur des lignes de balayage en réponse à ladite rotation.

2. Dispositif d'affichage selon la revendication 1, caractérisé en ce qu'il comprend des moyens de commutation (8, 9) mis en oeuvre en réponse à la rotation du tube cathodique pour augmenter ou diminuer sélectivement la longueur des lignes de balayage, ainsi que le nombre de lignes de balayage.

**Patentansprüche**

1. Bildschirm-Anzeigevorrichtung für einen Text, dessen Format eine erste Abmessung nach einer ersten Koordinaten-Achse und eine zweite Abmessung nach einer zweiten, senkrecht zur ersten Koordinaten-Achse liegenden Koordinaten-Achse auf dem Bildschirm einer Kathodenstrahlröhre (1) aufweist, welche ebenfalls eine erste Abmessung für eine erste Koordinaten-Achse und eine zweite Abmessung für eine zweite Koordinaten-Achse besitzt und es ermöglicht, besagten Text auf diesem Bildschirm sichtbar zu machen, und zwar nicht nur, wenn besagte Abmessung des Textes größer ist als die zweite, sondern auch, wenn die erste Abmessung kleiner ist als die zweite, wobei die Vorrichtung derart ausgebildet ist, daß der Bildschirm der Kathodenstrahlröhre dermaßen gedreht werden kann, daß die größte Abmessung des Textes der größten Abmessung des Bildschirmes entspricht, dadurch gekennzeichnet, daß hierin enthalten sind:

— Mittel, die es ermöglichen, besagte Kathodenstrahlröhre um 90° in bezug auf ihre fest angeordnete Ablenkspule (2) zu drehen,
— Mittel, um die Länge jeder Abtastzeile im Ansprechen auf besagte Umdrehung zu ändern, und
— Mittel, um die Anzahl der erforderlichen Abtastzeilen in einer der Längenänderung der Abtastzeilen entgegengesetzten Richtung im Ansprechen auf besagte Umdrehung zu ändern.

2. Vorrichtung nach Anspruch 1, dadurch gekennzeichnet, daß Schaltmittel (8, 9) vorgesehen sind, die im Ansprechen auf die Umdrehung der Kathodenstrahlröhre ausgelöst werden, um die Länge der Abtastzeilen sowie die Anzahl der Abtastzeilen wahlweise zu erhöhen oder herabzusetzen.

**Claims**

1. Device for displaying a text having a format with a first dimension along a first axis and a second dimension along a second axis perpendicular to said first axis, on a cathode ray tube screen (1) also having a first dimension along a first axis and a second dimension along a second axis, allowing display of said text on said screen as well when said first dimension is larger than the second one on when said first dimension is smaller that the second one, the device being of the type in which the cathode ray tube screen can be rotated so that the largest dimension of said text matches the largest dimension of said screen, characterized in that it comprises:
means allowing to rotate said cathode ray tube through 90 degrees with respect to its yoke (2) which remains fixed,
means for modifying the length of each scanning line according to said rotation,
and means for modifying the number of scanning lines required in a direction opposite to that of the length modification of the scanning lines according to said rotation.

2. Display device as set forth in claim 1, characterized in that it comprises switching means (8, 9) operated in response to the rotation of the cathode ray tube to selectively increase or decrease the length of the scanning lines and the number of scanning lines.

FIG. 1

F I G. 2

FIG. 5

FIG. 3

REG. HAUTEUR HOR.

ORIENTATION VERT. 10

8

ORIENTATION HORIZ. 11

18

REGL. LINEARITE HOR.

ORIENTATION VERT. 12

8

ORIENTATION HORIZ. 13

REGL. HAUTEUR VERT.

ORIENTATION VERT. 14

8

ORIENTATION HORIZ. 15

2

19

REGL. LINEARITE VERT.

ORIENTATION VERT. 16

8

ORIENTATION HORIZ. 17

# F I G.  4

11